# EUROPEAN PATENT APPLICATION

(11) **EP 4 458 735 A1**
(43) Date of publication of application: **06.11.2024**
(21) Application number: 24172901.1
(22) Date of filing: 29.04.2024
(51) Int. Cl.: B65G 15/22, B65G 15/36, B65G 15/58, B65G 37/00, B65G 54/02, B65G 35/06

(54) **CONVEYING SYSTEM AND METHOD WITH A CLOSED LOOP CONVEYING PATH**

(30) Priority: 03.05.2023 IT 202300008724
(71) Applicant: Azionaria Costruzioni Macchine Automatiche A.C.M.A. S.p.A., 40131 Bologna (IT)
(72) Inventor: CONSORTI, Francesco, I-40131 Bologna (IT); PIAZZI, Stefano, I-40131 Bologna (IT)
(74) Representative: Porta & Consulenti Associati S.p.A.

(57) **Abstract**

A conveying system (10) with a closed loop conveying path comprises an active branch (11) defining a first conveying path (15), a return branch (22) defining a second conveying path (23), and at least one puck carrier (17). The active branch (11) comprises a plurality of stators (13) of a linear electric motor (12) configured to generate respective stator magnetic fields and arranged along the first conveying path (15). The return branch (22) comprises at least one conveyor (24) comprising an advance path (AP) and a resume path (RP) cyclically run by a radially outer surface (26) of the conveyor (24). The advance path (AP) extends longitudinally in a direction compliant with a conveying direction along the second conveying path (23) and the resume path (RP) extends longitudinally in a direction opposite to the conveying direction along the second conveying path (23). The conveyor (24) comprises a plurality of bodies made of ferromagnetic material (25) placed along the conveyor (24). The puck carrier (17) is configured to run along the active branch (11) and the return branch (22) and comprises a housing seat (19) for an article and a magnet (18). The magnet (18) is configured to interact with magnetic fields produced by the plurality of stators (13) and is configured to magnetically attract the bodies of said plurality of bodies made of ferromagnetic material (25).

## Description

The present invention refers to a conveying system and method with a closed loop conveying path.

The present invention is usable for conveying articles along operating stations to subject the articles to processing in which the articles are conveyed between the operating stations by so-called "puck" or "puck carrier".

These puck carriers are typically used in automated production lines to retain and convey the articles with a predetermined orientation, such that each article can be presented in the operating stations with a suitable orientation to be correctly subjected to the specific processing.

An example of automated production lines using puck carriers are filling lines in the beverage industry or in the cosmetic industry, where the articles conveyed by the puck carriers are containers that must be filled, for example, with a liquid product and subsequently capped.

In the automated production lines that use puck carriers to convey articles, the articles are loaded onto the puck carriers, are conveyed by the puck carriers between the operating stations arranged along an active branch of a conveying path, and are unloaded by the puck carriers once the operations to which they are subjected in the operating stations have been completed. The puck carriers run, without articles, along a return branch of the conveying path so that they can be loaded again with articles to be conveyed along the active branch of the conveying path. Thus, the conveying path for the puck carriers is typically a circular, closed-loop path.

The faster the puck carriers run along the active branch of the conveying path, the higher the production rate of the production line is.

However, it is often necessary to slow down or even stop the articles, and hence the puck carriers, in the operating stations, making it necessary to be able to vary the conveying speed of each puck carrier along the active branch of the conveying path, for example by increasing the conveying speed between two operating stations and decreasing or zeroing the conveying speed at the operating stations.

In addition, during the loading of articles onto the puck carriers and during their removal from the puck carriers, the puck carriers should move at a controlled and predetermined speed such that it can be ensured that the articles are not damaged, altered or compromised, thus making it necessary to be able to vary the conveying speed of the puck carriers even at the loading and unloading stations of the articles.

In the Applicant's experience, it is possible to control each puck carrier along the conveying path independently of the other puck carriers (in such a way as to be able to slow down or stop a single puck carrier while the others are moving at higher or different speeds) by using conveying apparatuses with a linear motor drive.

In such conveying apparatuses, the puck carriers can be moved along the conveying path through magnetic interaction with a linear electric motor configured as multiple linear stators arranged continuously along the conveying path, wherein each puck carrier is provided with a magnet interacting with the linear stators. By appropriately driving the currents that run through the linear stators, it is possible to advance, stop, accelerate and slow down each puck carrier along the conveying path.

In the Applicant's experience, the conveying system with a closed loop conveying path can be entirely realized with a conveying apparatus with a linear motor drive, being able to control each puck carrier along the active branch and along the return branch in such a way as to set a law of motion for each puck carrier that maximizes the production rate of the production line.

However, the Applicant has noted that the conveying apparatuses with a linear motor drive are very expensive, negatively affecting the final cost of the article.

The Applicant has noted that a conveying apparatus with a linear motor drive could only be used to realize the active branch of the conveying system (along which the various operating stations are arranged), using conventional conveyor apparatus (having costs much lower than the costs of the conveying apparatuses with a linear motor drive) to realize the return branch of the conveying system.

The Applicant has however noted that using a conventional conveyor apparatus, the puck carriers tend to move on the conveyor while being conveyed.

The Applicant has verified that this causes the loss of control over the exact speed and position of the puck carriers while running along the return branch, failing to guarantee that each puck carrier follows a preset and intended law of motion.

The Applicant has perceived that if it were possible to retain each puck carrier in a stable and precise manner on a conveyor placed in the return branch without resorting to complex and expensive retention solutions (or at least resorting to less expensive solutions compared to the conveying apparatuses with a linear motor drive), it would be possible to control the speed of that conveyor and therefore also to control the speed and the position of the puck carrier while running along the return branch, ensuring that each puck carrier follows a predefined law of motion and, at the same time, reducing the costs of the conveying system.

The Applicant has perceived that, since each puck carrier is provided with a magnet to be able to interact with the continuous stators of the conveying apparatus with a linear motor drive placed in the active branch, this magnet could be used to retain each puck carrier on a conveyor placed in the return branch.

The Applicant has found that by using a conveyor comprising ferromagnetic parts in the return branch of the conveying system, it is possible to retain each puck carrier on the conveyor by effect of the magnetic interaction between the magnet placed on the puck carrier and the ferromagnetic parts of the conveyor, to drive the conveyor with desired speeds and to ensure that each puck carrier runs along the return branch of the conveying system integral to the conveyor. Such a conveyor comprising ferromagnetic parts may present, in accordance with the Applicant's experience, much lower production and installation costs than the conveying apparatuses with a linear motor drive, thus managing to reduce the costs of the conveying system.

The present invention therefore concerns, in a first aspect thereof, a conveying system with a closed loop conveying path.

Preferably, the conveying system comprises an active branch defining a first conveying path, a return branch defining a second conveying path, and at least one puck carrier.

Preferably, the active branch comprises a plurality of stators of a linear electric motor configured to generate respective stator magnetic fields and arranged along the first conveying path.

Preferably, the return branch comprises at least one conveyor comprising an advance path and a resume path cyclically run by a radially outer surface of the conveyor.

Preferably, the advance path of the conveyor extends longitudinally in a direction compliant with a conveying direction along the second conveying path and the resume path extends longitudinally in a direction opposite to the conveying direction along the second conveying path.

Preferably, the conveyor comprises a plurality of bodies made of ferromagnetic material placed along the conveyor.

Preferably, the puck carrier is configured to run along the active branch and the return branch.

Preferably, the puck carrier comprises a housing seat for an article and a magnet, said magnet being configured to interact with magnetic fields produced by said plurality of stators and being configured to magnetically attract said bodies made of ferromagnetic material.

The present invention concerns, in a second aspect thereof, a conveying method along a closed loop conveying path.

Preferably, it is provided for loading an article onto a puck carrier.

Preferably, the puck carrier comprises a magnet.

Preferably, it is provided for inserting the puck carrier along a first conveying path comprising a plurality of stators of linear electric motor configured to generate respective stator magnetic fields interacting with said magnet of the puck carrier to move the puck carrier along the first conveying path.

Preferably it is provided for unloading the article from the puck carrier.

Preferably it is provided for inserting the puck carrier along a second conveying path comprising at least one conveyor.

Preferably, the conveyor comprises a plurality of bodies made of ferromagnetic material interacting with said magnet of the puck carrier to retain the puck carrier on a radially outer surface of the conveyor.

The plurality of bodies made of ferromagnetic material in the conveyor allow a magnetic interaction between the magnet (already) present on the puck carrier such that it can attract and retain the puck carrier on the radially outer surface of the conveyor. Such a plurality of bodies made of ferromagnetic material may also be easily integrated into the conveyor and may in some cases be already present in the conveyor in the form of a reinforcing cord to increase the structural strength (e.g. tensile strength) of the conveyor. Therefore, the production and management costs of the conveyor are also very low compared to the production costs of the linear electric motor, allowing a saving in economic terms of the conveying system.

The expression "reinforcing cord" is intended to indicate a long-shaped element consisting of one or more elongated elements (also referred to as "yarns") possibly covered by, or incorporated in, a matrix of elastomeric material.

The reinforcing cords can have one or more "strands", where "strand" means a bundle of filaments twisted together. For example, a single strand or at least two strands twisted together may be provided.

The expression "ferromagnetic material" is intended to indicate a material that when placed in a magnetic field is able to magnetize and maintain this magnetization at least as long as it is subjected to the magnetic field.

The expression "centreline plane" of a conveyor means a plane perpendicular to a plane on which the radially outer surface of the conveyor lies.

The term "width" of the conveyor means a dimension of the conveyor measured along a direction orthogonal to the centreline plane.

The terms "radial" and "axial" are used with reference respectively to a direction substantially perpendicular to the radially outer surface of the conveyor and to a direction substantially parallel to the radially outer surface of the conveyor and perpendicular to the centreline plane. An axial direction is also referred to hereinafter as a transverse direction.

The terms "longitudinal" and "longitudinally" are used with reference to the direction of development of the conveyor along the return branch.

The expression "circumferential development" of a conveyor, means a maximum dimension of the conveyor perpendicular to the width of the conveyor, i.e. the development in plan of the radially outer surface of the conveyor on a plane perpendicular to the centreline plane of the conveyor.

The present invention may have at least one of the preferred features described below. Such features may be present individually or in combination with each other, unless expressly stated otherwise, both in the conveying system and in the method of the present invention.

Preferably, the first conveying path along which the puck carrier is inserted coincides with the active branch.

Preferably, the second conveying path along which the puck carrier is inserted coincides with the return branch.

Preferably, a plurality of puck carriers are provided.

Preferably, all puck carriers are simultaneously engaged on the active branch, either or in combination, on the return branch.

Preferably, the magnetic attraction force between the magnet of the puck carrier and a body made of ferromagnetic material is comprised between 0.2 and 10 the weight force of the puck carrier, more preferably comprised between 0.2 and 8 the weight force of the puck carrier, more preferably comprised between 0.2 and 7 the weight force of the puck carrier, more preferably comprised between 0.2 and 5 the weight force of the puck carrier, more preferably comprised between 0.3 and 4 the weight force of the puck carrier, more preferably comprised between 0.3 and 3 the weight force of the puck carrier, more preferably comprised between 0.4 and 3 the weight force of the puck carrier, more preferably comprised between 0.5 and 1.5 the weight force of the puck carrier.

The magnetic attraction force between the magnet of the puck carrier and each body made of ferromagnetic material is preferably determined by resting the puck carrier on the radially outer surface of the conveyor and by measuring the force expressed in Newton to lift the puck carrier from the radially outer surface of the conveyor.

The weight force of the puck carrier is calculated as the weight expressed in kilograms of the puck carrier multiplied by the gravitational acceleration (9.81 m/second²).

Preferably, the return branch comprises a plurality of conveyors.

Preferably, each conveyor comprising an advance path and a resume path cyclically run by a radially outer surface of the conveyor.

Preferably, said advance path extends longitudinally in a direction compliant with a conveying direction along the second conveying path and said resume path extends longitudinally in a direction opposite to the conveying direction along the second conveying path.

Preferably, the conveying speed of a puck carrier along a conveyor is equal to the advancement speed of the radially outer surface of the conveyor along the advance path.

By providing a plurality of conveyors it is possible to transfer, along the return branch, the puck carrier from one conveyor to another conveyor.

By advancing the radially outer surface of each conveyor along the advance path with a respective advancement speed, it is possible to convey each puck carrier along the return path with conveying speeds that are not necessarily constant along the return branch. Furthermore, it is possible, by suitably ordering the conveyors, to convey one or more puck carriers at a first speed along the return branch (while they are coupled to one conveyor) and to simultaneously convey one or more puck carriers (while they are coupled to another conveyor) at a second speed (different from the first speed) along the return branch.

The Applicant has found that in this way it is possible to set with great precision and according to a plurality of mutually different possibilities, the law of motion of the puck carriers while running along the return branch, increasing the flexibility of use of the conveying system.

Preferably, the radially outer surfaces of all the conveyors are parallel to each other when running along their respective advance paths.

Preferably, said conveyors are arranged adjacent and successive to each other in a longitudinal direction to form a row of conveyors along the second conveying path.

As the number of conveyors arranged adjacent and successive to each other along the second conveying path increases, the possible combinations of mutually different conveying speeds of the puck carriers when running along the return branch increase.

Preferably, the advancement speed of the radially outer surface of a conveyor along the advance path is constant.

Preferably, the advancement speeds of the radially outer surfaces of two longitudinally adjacent and successive conveyors along their respective advance paths are different from each other.

Preferably, the radially outer surfaces of two longitudinally adjacent conveyors are axially aligned with each other when running along their respective advance paths.

In this way, no steps or ramps are created in the passage of a puck carrier from one conveyor to the longitudinally adjacent and successive conveyor, facilitating this passage.

Preferably, longitudinal ends of the radially outer surfaces of two longitudinally adjacent conveyors are axially arranged side-by-side when running along their respective advance paths.

In this way, during the passage of a puck carrier from a first conveyor to a longitudinally adjacent and successive second conveyor, the puck carrier intercepts the second conveyor while leaving the first conveyor, making the passage of a puck carrier from one conveyor to a successive one easy and smooth.

Preferably, the maximum extension in a longitudinal direction of a conveyor coincides with the length of the advance path of the radially outer surface of said conveyor.

Preferably, when a portion of the radially outer surface of a conveyor finishes running along the advance path and starts running along the resume path, such portion of the radially outer surface is deviated from the conveying direction along the second conveying path.

Preferably, when a portion of the radially outer surface of a conveyor finishes running along the resume path and starts running along the advance path, such portion of the radially outer surface is deviated to align with the conveying direction along the second conveying path.

Preferably, the passage of a puck carrier between a first conveyor and a second conveyor that are longitudinally adjacent and successive takes place according to the following sequence:
the puck carrier is retained by the radially outer surface of the first conveyor;
the radially outer surface of the first conveyor (on which the puck carrier is retained) approaches the end of the advance path;
when the longitudinal end of the radially outer surface of the first conveyor finishes running along the advance path and starts running along the resume path the radially outer surface deviates from the conveying trajectory along the second conveying path and the puck carrier is separated from the radially outer surface of the first conveyor;
simultaneously, the longitudinal end of the radially outer surface of the second conveyor starts running along the advance path and the puck carrier is separated from the radially outer surface of the first conveyor being retained only by the radially outer surface of the second conveyor.

Preferably, the radially outer surfaces of two conveyors, separated in a longitudinal direction by an interposed conveyor, are circumferentially aligned with each other when running along their respective advance paths.

In this way, the overall width of the return branch can be contained.

Preferably, there is provided at least one guide rail for said puck carrier developing along the active branch and along the return branch.

Preferably, the guide rail has the function of accompanying the puck carrier along the active branch and the passive branch in such a way that it can easily interact with the plurality of linear electric motor stators and with the conveyors.

Preferably, the puck carrier comprises at least one carriage engaged on said guide rail to run along said guide rail.

Preferably, said carriage comprises a plurality of wheels sliding on the guide rail.

Preferably, said puck carrier, when engaged on said guide rail and when running along said return branch, is placed in contact with the radially outer surface of the conveyor when the radially outer surface runs along the advance path.

In this way the magnetic attraction between puck carrier and conveyor is maximized.

Preferably, said magnet of the puck carrier is placed in contact with the radially outer surface of the conveyor when the radially outer surface runs along the advance path.

Preferably, each conveyor is wound around a respective first pulley and second pulley.

Preferably, said first pulley is motorized and is placed along the second conveying path successively to said second pulley and said second pulley is idle.

Preferably, the active path of the radially outer surface of a conveyor consists of a straight portion between the second and the first pulley.

Preferably, the resume path of the radially outer surface of a conveyor is a curvilinear path comprising a first curved portion partially wound around the first pulley, a second curved portion partially wound around the second pulley and a straight portion between the first and second pulley.

Preferably, the straight portion of the resume path is parallel to the straight portion of the active path of the radially outer surface of a conveyor.

Preferably, the first pulley of a conveyor is mounted axially adjacent and coaxial with the second pulley of a longitudinally successive conveyor.

Preferably, there are provided a loading station and an unloading station interposed between the active branch and the return branch.

Preferably, in the loading station said carrier receives an article to be conveyed along the active branch.

Preferably, in the unloading station an article conveyed by the puck carrier is removed from the puck carrier.

Preferably, when said puck carrier transits through said loading station, the puck carrier is transferred from the return branch to the active branch.

Preferably, when said puck carrier transits through said unloading station, the puck carrier is transferred from the active branch to the return branch.

Preferably, said unloading station comprises a first carousel having at least one conveying seat configured to engage with said puck carrier.

Preferably, said first carousel is rotatable about an axis of rotation perpendicular to the radially outer surface of any conveyor.

Preferably, said first carousel is placed at a final stretch of the return branch and at an initial stretch of the active branch.

Preferably, the rotation of the first carousel brings said conveying seat into a position tangential to the path followed by a puck carrier along the return branch.

Preferably, said loading station comprises a second carousel having at least one conveying seat configured to engage with said puck carrier.

Preferably, said second carousel is rotatable about an axis of rotation perpendicular to the radially outer surface of any conveyor.

Preferably, said second carousel is placed at a final stretch of the active branch and at an initial stretch of the return branch.

Preferably, the rotation of the second carousel brings said conveying seat into a position tangential to the path followed by a puck carrier along the return branch.

In some embodiments, the conveyor is a chain conveyor comprising a plurality of links each having a substantially flat radially outer conveying plane.

In this case, each chain link comprises at least one body made of ferromagnetic material arranged on the radially outer conveying plane or integrated into the chain link structure.

The radially outer conveying plane of the chain link can be entirely made of ferromagnetic material by making said body in a ferromagnetic material.

In other embodiments, the conveyor is a conveyor belt.

In this case, preferably the plurality of bodies made of ferromagnetic material are joined together to form at least one reinforcing cord.

Preferably, the reinforcing cord extends throughout the circumferential development of the conveyor belt.

Preferably, the conveyor belt comprises a plurality of reinforcing cords made of ferromagnetic material.

Preferably, each conveyor belt comprises at least one reinforcing cord made of ferromagnetic material which extends throughout the circumferential development of the conveyor belt.

Preferably, the conveyor belt is a toothed belt conveyor belt.

Preferably, the actions of loading an article onto a puck carrier, inserting the puck carrier along a first conveying path, unloading the article from the puck carrier, and inserting the puck carrier along a second conveying path, are implemented in sequence one after the other.

Preferably, the actions of loading an article onto a puck carrier, inserting the puck carrier along a first conveying path, unloading the article from the puck carrier, and inserting the puck carrier along a second conveying path, are repeated cyclically.

Preferably, loading an article onto a respective puck carrier is implemented by loading one puck carrier at a time with an article.

Preferably, loading an article onto a puck carrier is implemented with the puck carrier stationary along the closed loop conveying path.

Preferably, loading an article onto a puck carrier is implemented while additional puck carriers run along the active branch and the return branch.

Preferably, loading an article onto a puck carrier is implemented in the loading station.

Preferably, it is provided for inserting one after the other the puck carriers along the active branch.

Preferably, unloading the article from the puck carrier is implemented by unloading the articles from one puck carrier at a time.

Preferably, unloading an article from a puck carrier is implemented with the puck carrier stationary along the closed loop conveying path.

Preferably, unloading an article from a puck carrier is implemented while additional puck carriers run along the active branch and the return branch.

Preferably, unloading an article from a puck carrier is implemented in the unloading station.

Preferably, it is provided for inserting one after the other the puck carriers along the return branch.

Preferably, after inserting the puck carrier along a second conveying path and before loading an article onto a puck carrier, it is provided for transferring the puck carrier between a plurality of conveyors.

Preferably, the conveying speed of a puck carrier when retained on the radially outer surface of a conveyor is different from the conveying speed of the same puck carrier when retained on the radially outer surface of an adjacent and successive conveyor along the return branch.

Preferably, when a respective puck carrier is retained on each conveyor, the conveying speeds of the carriers are all non-zero or all zero.

Preferably, the conveying speed of a puck carrier when retained on the radially outer surface of the conveyor adjacent to the loading station is equal to the conveying speed along the loading station.

Preferably, it is not provided for accumulating puck carriers along the return branch.

Further characteristics and advantages of the present invention will become clearer from the following detailed description of a preferred embodiment thereof, with reference to the appended drawings and provided by way of indicative and non-limiting example, wherein:
- figure 1 is a schematic plan view of a conveying system with a closed loop conveying path in accordance with the present invention:
- figure 2 is a schematic plan view of a return branch of the system of figure 1;
- figure 3 is a schematic side view of the return branch of figure 2;
- figure 4 is a schematic perspective view of a detail of the system of figure 1;
- figure 5 is a schematic perspective view of a further detail of the system of figure 1;

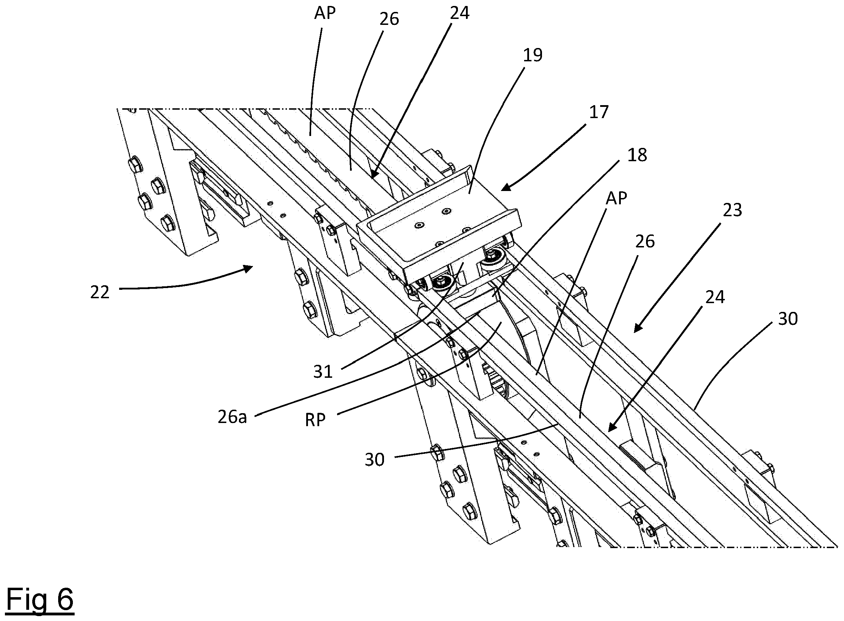

- figure 6 is a schematic perspective view of some parts of the system of figure 1; and
- figure 7 is a schematic perspective view of further parts of the system of figure 1.

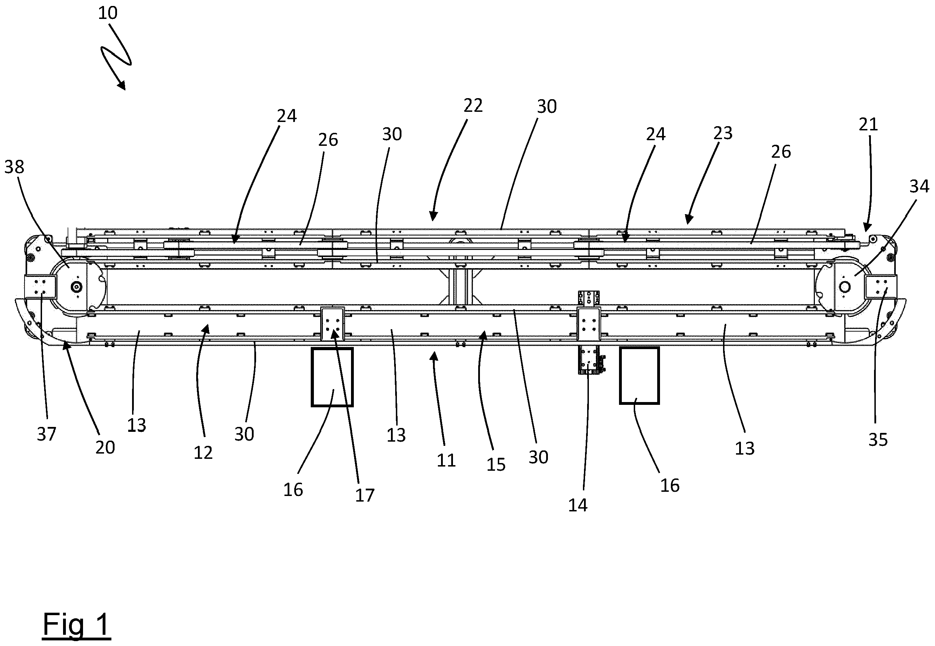

A conveying system with a closed loop conveying path in accordance with the present invention has been indicated as a whole with number 10 in figure 1.

The system 10 comprises an active branch 11 comprising a linear electric motor 12 having a plurality of stators 13 of a linear electric motor. The stators 13 are placed in a fixed position along the active branch 11 and are placed, along the active branch 11, one successively to the other.

An exemplary embodiment of stators 13 provides that each stator comprises a ferromagnetic armature having a plurality of grooves housing electrical windings configured to be crossed by time-varying electrical currents to induce corresponding stator magnetic fields.

A controller 14 is electrically connected with the stators 13 to apply the time-varying electric currents to the electric windings of the stators 13 in such a way that, at a same instant, different stators 13 can generate different magnetic fields and that a same stator 13 can generate, at different instants, different magnetic fields.

The stators 13 are aligned with each other to form a first conveying path 15 that coincides with the active branch 11.

One or more operating stations 16 configured to perform operations on a piece being processed are arranged along the active branch 11. Such processing could for example be the filling, closing, labelling of a bottle (in this case the bottle being said article).

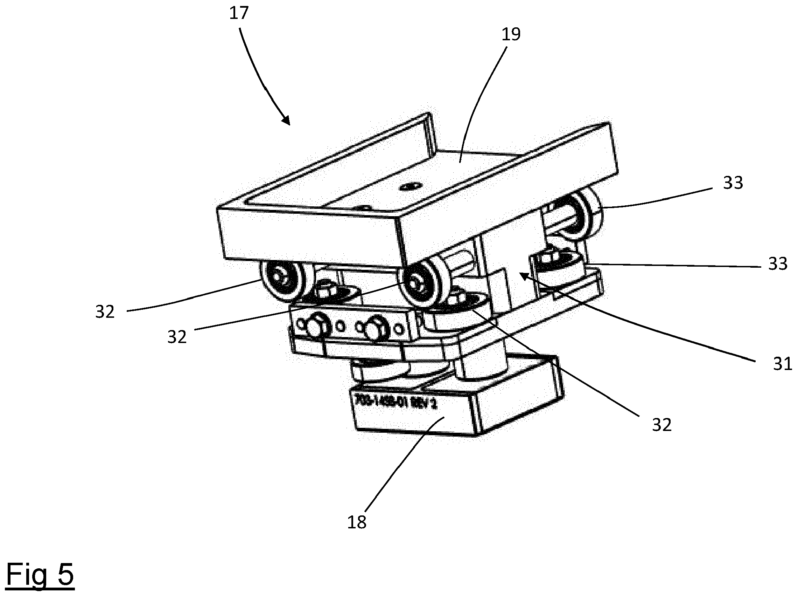

The system 10 further comprises a plurality of puck carriers 17 (only schematized in figure 1) configured to convey the articles along the active branch 11. For this purpose, each puck carrier 17 comprises a magnet 18 (figure 5) capable of generating a permanent magnetic field that interacts with the magnetic fields generated by the stators 13. The interaction of the magnetic field of the magnet 18 with the magnetic field of each stator 13 generates a driving force of electromagnetic origin that moves the puck carrier 17 along the active branch 11.

Each puck carrier 17 can therefore move following its own law of motion along the active branch 11 by driving each stator 13 with a corresponding electric current. The stators 13 are driven in such a way as to accelerate, slow down, stop or advance the puck carrier 17 as a function of its position along the active branch 11 and as a function of the position and characteristics of the operating stations 16. By way of example, the stators 13 can be driven in such a way as to accelerate the puck carrier 17 up to a first conveying speed, slow down to a second speed or stop the puck carrier at an operating station 16, accelerate again the puck carrier 17 at the end of the operations performed in the operating station. In any case, depending on the needs, any law of motion may be imposed on each puck carrier along the first conveying path 15. Furthermore, each puck carrier 17 can be moved along the first conveying path 15 independently of the other puck carriers 17. Although it is preferable to move all the puck carriers 17 with the same law of motion (since all the articles conveyed by them have to be subjected to the same processing in the operating stations 16), it is also possible to provide one or more puck carriers 17 with laws of motion different from the other puck carriers 17 (for example in the event that a processing on a specific article has not been successful and it is necessary to subject such article to such processing again).

In order to be able to accommodate and convey an article, each puck carrier 17 comprises a housing seat 19 whose shape is configured to appropriately retain the article to be conveyed. In figure 5, the housing seat 18 has been illustrated in the form of trays by way of example. As shown in figure 5, the magnet 18 is placed on the opposite side with respect to the housing seat 19.

The system 10 comprises a loading station 20 to allow the articles to be loaded onto the puck carriers 17. The loading station 20 also has the function of inserting each puck carrier 17 with the article loaded thereon into the active branch 11.

At the end of the active branch 11 there is provided an unloading station 21 where the articles are removed from the puck carriers 17.

In order to allow to the puck carriers 17 to return to the loading station 20, the system 10 comprises a return branch 22.

The return branch 22 develops between the unloading station 21 and the loading station 20 and coincides with a second conveying path 23 for the puck carriers 17.

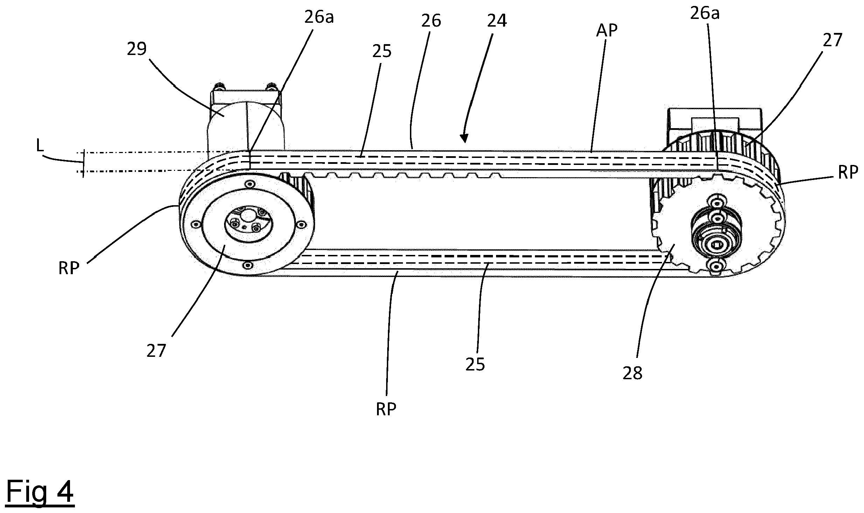

The return branch 22 comprises a plurality of conveyors 24 which, in the preferred embodiment of the invention and illustrated in the accompanying drawings, are made by a plurality of conveyor belts. Each conveyor 24 comprises a plurality of bodies made of ferromagnetic material 25. In the preferred embodiment of the invention and illustrated in the accompanying drawings, such bodies made of ferromagnetic material are joined together to form one or more reinforcing cords 25 (depicted in hatching in figure 4) made of ferromagnetic material for the conveyor belt 24.

In the following of the present description, explicit reference will be made to the conveyor belts 24 and to the reinforcing cords 25 of the preferred embodiment of the invention.

A person skilled in the art will understand that the following may also apply to different structures of conveyor 24 and to bodies made of ferromagnetic material other than reinforcing cords of conveyor belts.

Each conveyor belt 24 is closed into a loop and the reinforcing cords 25 made of ferromagnetic material preferably extend throughout the circumferential development of the conveyor belt 24. The reinforcing cords 25 made of ferromagnetic material can be applied around the conveyor belt 24 adhering thereto or, preferably, are incorporated into a matrix made of polymeric material that makes up the conveyor belt 24. The reinforcing cords 25 made of ferromagnetic material are continuous cords.

Examples of conveyor belt comprising one or more reinforcing cords made of ferromagnetic material are toothed belts made of polyurethane that incorporate reinforcing cords made of chromium-containing martensitic and ferritic steels (AISI 400 series). These reinforcing cords make an armature for the polyurethane belt decreasing the elasticity of the polyurethane belt and increasing its breaking load. In the Applicant's experience such types of belts are normally used in the industrial sector in which the present invention is applied.

Each conveyor belt 24 defines an advance path AP and a resume path RP cyclically run by a radially outer surface 26 of the conveyor belt 24. The advance path AP develops in a direction compliant with the conveying direction of the puck carriers 17 along the second conveying path 23 and the resume path develops in a direction opposite to the conveying direction of the puck carriers 17 along the second conveying path 23.

Each conveyor belt 24 is wound into a loop on a respective first pulley 27 and on a respective second pulley 28 which are spaced apart along the second conveying path 23. The first pulley 27 follows, along the second conveying path 23, the second pulley 28 and is motorized by a respective electric motor 29. The second pulley 28 is idle. At least some of the second pulleys 28 are mounted coaxial with the first pulleys 27.

When the puck carriers are introduced into the return branch 22, the magnets 18 attract the reinforcing cords 25 of the conveyor belts 24 and adhere to the radially outer surfaces 26 of the conveyor belts 24 while running along the advance path AP. The puck carriers 24 therefore move integrally with the outer surfaces of the conveyor belts 24.

To accompany the puck carriers 17 while running along the active branch 11 and the return branch 22 avoiding that they can derail from the active branch 11 and from the return branch 22, the system 10 comprises guide rails 30. As schematically illustrated in figure 1, there are provided two guide rails 30 parallel to each other and parallel to the active branch 11 and to the return branch 22. The two guide rails 30 are arranged externally, with respect to directions transverse to the first conveying path 15 and to the second conveying path 23, to the stators 13 and to the conveyor belts 24. The stators 13 and the conveyor belts 24 are placed between the two guide rails 30.

In order to follow the guide rails 30, each puck carrier 17 comprises a carriage 31 for each rail 30. As illustrated in figure 5, the carriages 31 are placed between the housing seat 19 and the magnet 18. Each carriage 31 comprises two pairs of castors 32, 33 wherein the castors of the first pair of castors 32 are rotatable about axes of rotation perpendicular to the axes of rotation of the castors of the second pair of castors 33. Each pair of castors 32, 33 slides along a surface of a guide rail 30. The coupling between the two carriages 31 and the two rails 30 allows the puck carrier 17 to have a single degree of freedom with respect to the guide rails 30. Such a single degree of freedom is a translation along the guide rails 30. The coupling of each puck carrier 17 with the guide rails 30 defines a determined and invariable distance of the magnet 18 with respect to the guide rails 30. This determined and invariable distance is such as to keep the magnet 18 slightly spaced from the stators 13 while running along the puck carrier 17 of the active branch 11, creating a gap between magnet 18 and stators 13. This determined and invariable distance is such as to position the magnet 18 on the radially outer surfaces 26 of the conveyor belts 24 (when running along their respective advance paths AP) while running along the puck carrier 17 of the return branch 22.

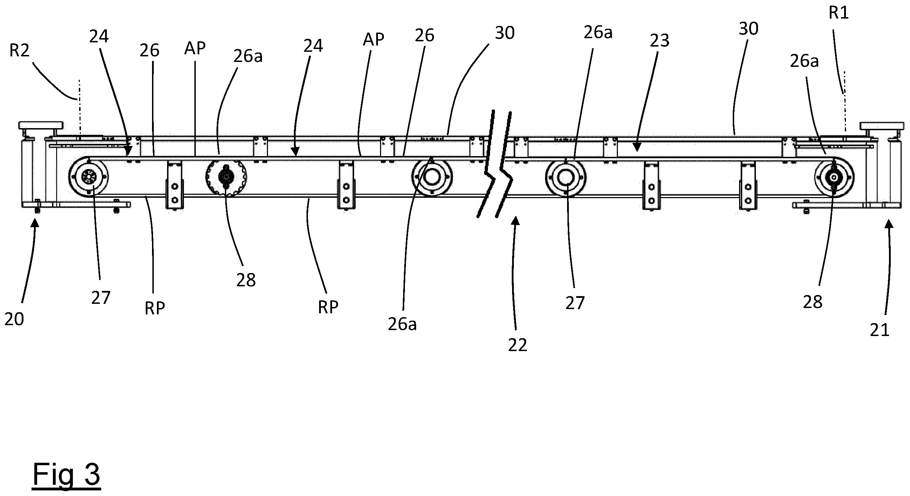

In this regard, conveyor belts 24 that are longitudinally consecutive to each other along the return branch 22 have the respective radially outer surfaces 26, while running along the coplanar advance path AP, as schematically illustrated in figure 3.

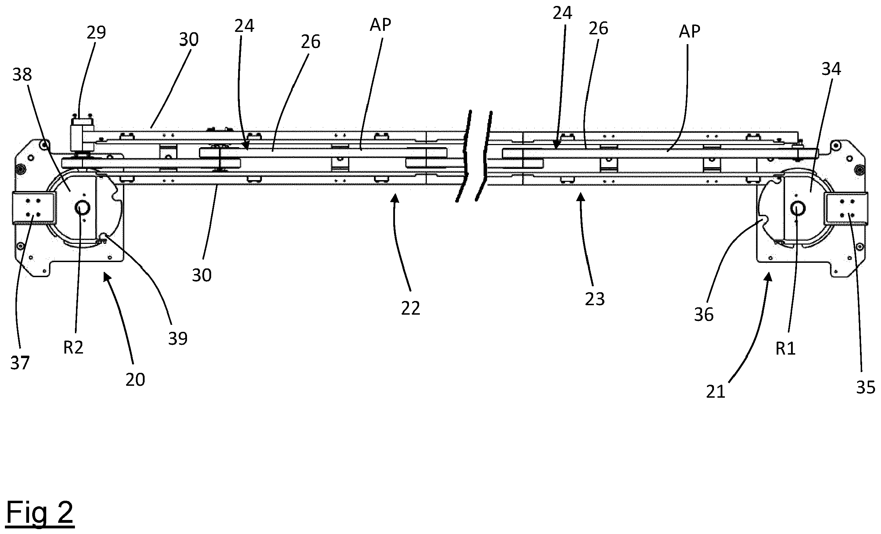

In order to contain the conveyor belts 24 within the two rails 30, the space occupied, in a direction transverse to the return branch 22, by the conveyor belts 24 is equal to about twice the width L of a single conveyor belt 24, as schematically illustrated in figure 2. For this purpose, the radially outer surfaces 26 of two conveyor belts 24, separated in a longitudinal direction by an interposed conveyor belt 24, are longitudinally aligned with each other when running along their respective advance paths AP. The conveyor belts 24 are arranged along two parallel rows, each of which having a width equal to the width L of a single conveyor belt 24. Each of these two parallel rows never has two conveyor belts 24 that are arranged consecutive along the return branch 22 and belonging to the same row. A conveyor belt 24 of the other row is always arranged between two conveyor belts 24 of one row. The width L of a conveyor belt 24 is measured in a direction transverse to the advance path AP, as illustrated in figure 4. All conveyor belts 24 have the same width L.

As mentioned, some of the second pulleys 28 are mounted coaxial with the first pulleys 27. In particular, the second pulley 28 of a first conveyor belt 24 is coaxial with the first pulley 27 of a second conveyor belt 24 adjacent and preceding the first conveyor belt 24 along the return branch 22. In this way, the longitudinal ends 26a of the radially outer surfaces 26 of two longitudinally adjacent conveyor belts 24 are aligned in a transverse direction when running along their respective advance paths AP. In particular, the longitudinal end 26a of a radially outer surface 26 (of a first conveyor belt 24) that is starting to run along its own advance path AP is transversely aligned with the radially outer surface 26 (of a second conveyor belt 24) that is finishing to run along its own advance path AP, as depicted in figure 2.

The unloading station 21 connects the active branch 11 to the return branch 22. The unloading station 21 is configured to pick up a puck carrier 17 with its relative article from the active branch 11, to bring the puck carrier 17 and its relative article at an extraction station 35 for extracting the article from the puck carrier 17 (schematized in figure 2) and to bring the puck carrier 17 without the article any more in the return branch 22.

In an embodiment illustrated in the accompanying figures, the unloading station 21 comprises a first carousel 34 that rotates around an axis of rotation R1 perpendicular to the radially outer surface 26 of the conveyor belts 24 when running along the advance path AP. The first carousel 34 rotates step-by-step around the axis of rotation R1 between the active branch 11, the extraction station 35 and the return branch 22. At the extraction station 35, the first carousel 34 stops to allow the article to be extracted from the puck carrier 17. To convey the puck carrier, the first carousel 34 comprises a plurality of conveying seats 36 arranged circumferentially around the axis of rotation R1. During the rotation of the first carousel 34, the conveying seats 36 place themselves one after the other at a final end of the first conveying path 15 of the linear electric motor 12 so as to pick up a puck carrier 24 from the conveying path 15. During the rotation of the first carousel 34, the conveying seats 36 place themselves one after the other at the longitudinal end 26a of the radially outer surface 26 (while starting to run along its own advance path) of the first conveyor belt 24 of the return branch 22, in such a way as to release a puck carrier 24 on the radially outer surface 26 of the first conveyor belt 24.

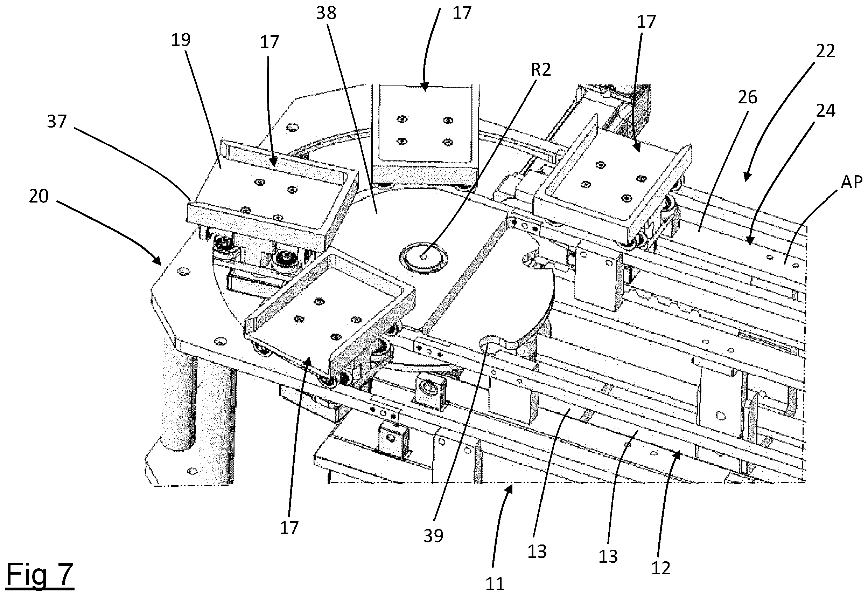

The loading station 20 connects the return branch 22 to the active branch 11. The loading station 20, better illustrated in figure 7, is configured to pick up a puck carrier 17 from the return branch 22, to bring the puck carrier 17 at an insertion station 37 for inserting the article on the puck carrier 17 and to bring the puck carrier 17 with the article thereon inserted into the active branch 11.

In an embodiment illustrated in figure 7, the loading station 20 comprises a second carousel 38 that rotates around an axis of rotation R2 perpendicular to the radially outer surface 26 of the conveyor belts 24 when running along the advance paths AP. The second carousel 38 rotates step-by-step around the axis of rotation R2 between the return branch 22, the insertion station 37 and the active branch 11. At the insertion station 37, the second carousel 38 stops to allow the article to be inserted on the puck carrier 17. To convey the puck carrier, the second carousel 38 comprises a plurality of conveying seats 39 arranged circumferentially around the axis of rotation R2. During the rotation of the second carousel 38, the conveying seats 39 place themselves one after the other at the longitudinal end 26a of the radially outer surface 26 (while finishing to run along its advance path) of the last conveyor belt 24 of the return branch 22, in such a way as to pick up a puck carrier 24 from the radially outer surface 26 of the last conveyor belt 24. During the rotation of the second carousel 38, the conveying seats 39 place themselves one after the other at an initial end of the first conveying path 15 of the linear electric motor 12 in such a way as to release a puck carrier 24 onto the first conveying path 15.

The first carousel 34 is, in the preferred embodiment of the invention, the same as the second carousel 38.

In use, the loading station 20 inserts a puck carrier 17 with an article on board onto the first conveying path 15 of the linear electric motor 12. The controller 14 is driven to supply time-varying electric currents to the electric windings of the stators 13, in such a way as to impart to the puck carrier 17 a law of motion that carries it through the operating stations 16. While the puck carrier 17 runs along the first conveying path 15, other puck carriers 17 with their relative articles are inserted on the first conveying path 15. The controller 14 is driven in such a way as to impart to each puck carrier 17 its own law of motion.

When a first puck carrier 17 reaches the final end of the first conveying path 15 (having thus run along the entire active branch 11), the unloading station 21 picks up the puck carrier 17 from the first path 15 and brings it at the extraction station 35. This operation is performed by the first carousel 34 which, by bringing a respective conveying seat 36 at the final end of the first conveying path 15, intercepts the first puck carrier 17 and moves it away from the stators 13 of the electric motor 11. When the first puck carrier 17 reaches the extraction station 35, the first carousel 34 is stopped in its rotation to allow the article to be unloaded from the first puck carrier 17. Meanwhile, a second puck carrier 17 was picked up from the unloading station 21 so as to bring it to the extraction station 35. The laws of motion of the puck carriers along the active branch 11 are set so that a puck carrier arrives at the final end of the first conveying path 15 while the unloading station 21 is bringing a puck carrier already picked up towards the extraction station 35. In particular, while the first carousel 34 is rotating to bring a puck carrier already picked up towards the extraction station 35, the carousel picks up a further puck carrier 17 from the active branch 11. This does not create accumulations of puck carriers 17 along the first conveying path 15. In particular, no buffer accumulation zones of puck carriers are created at the final end of the first conveying path 15.

When the article has been removed from the first puck carrier 17, the unloading station brings the first puck carrier 17 in the return branch 22. During this operation, the magnet 18 of the puck carrier 17 attracts the reinforcing cords 25 made of ferromagnetic material of the first conveyor belt 24 and adheres, remaining integral, to the radially outer surface 26 of the first conveyor belt 24 which is starting to run along its own advance path AP. This operation is performed by the first carousel 34 which, by bringing the conveying seat 36 that conveys the first puck carrier 17 at the longitudinal end 26a of the radially outer surface 26 (while starting to run along its own advance path) of the first conveyor belt 24 of the return branch 22, rests the first puck carrier 24 on the radially outer surface 26 of the first conveyor belt 24. The magnetic attraction between the magnet 18 of the puck carrier 17 and the reinforcing cords 25 made of ferromagnetic material of the first conveyor belt 24 retains the puck carrier 17 on the first conveyor belt 24.

When the first puck carrier 17 is conveyed between the extraction station 35 and the return branch 22, the second puck carrier 17 reaches the extraction station 35 and the first carousel 34 is stopped in its rotation to allow the article to be unloaded from the second puck carrier 17.

When the radially outer surface 26 of the first conveyor belt 24 finishes to run along its advance path AP with the first puck carrier 17 thereon, the radially outer surface 26 of the second conveyor belt 24 finishes to run along its resume path RP. When the radially outer surface 26 of the first conveyor belt 24 starts running along its own resume path RP, the radially outer surface 26 of the second conveyor belt 24 starts running along its own advance path AP. The first puck carrier 17, having to follow the rails 30, is separated from the radially outer surface 26 of the first conveyor belt 24 and the first puck carrier 17 is intercepted from the radially outer surface 26 of the second conveyor belt 24. The magnetic force between the magnet 18 of the first puck carrier 17 and the reinforcing cords 25 made of ferromagnetic material of the second conveyor belt 24 retains the puck carrier 17 on the second conveyor belt 24.

The passage of the first puck carrier 17 from the second to the third conveyor belt 24 and all successive passages up to the last conveyor belt 24 (illustrated in figure 4) are repeated according to the manners described above in the passage of the first puck carrier 17 from the first to the second conveyor belt 24.

When the first puck carrier 17 reaches the longitudinal end 26a of the radially outer surface 26 (while finishing to run along its advance path) of the last conveyor belt 24 of the return branch 22, the loading station 20 picks up the first puck carrier 17.

The loading station 20 picks up the puck carrier 17 from the second conveying path 23 and brings it at the insertion station 37. This operation is performed by the second carousel 38 which, by bringing a respective conveying seat 39 at the longitudinal end 26a of the radially outer surface 26 (while finishing to run along its advance path) of the last conveyor belt 24, intercepts the first puck carrier 17. When the radially outer surface 26 of the last conveyor belt 24 starts running along its own resume path RP, the puck carrier 17 is conveyed by the conveying seat 39 of the second carousel 38.

When the first puck carrier 17 reaches the insertion station 37, the second carousel 38 is stopped in its rotation to allow the article to be inserted on the first puck carrier 17. Meanwhile, the second puck carrier 17 was picked up from the loading station 20 so as to bring it in the insertion station 37.

The laws of motion of the puck carriers 17 along the return branch 22 are set so that a puck carrier arrives at the final end of the second conveying path 23 while the loading station 20 is bringing a puck carrier already picked up towards the insertion station 37. In particular, while the second carousel 38 is rotating to bring a puck carrier already picked up towards the insertion station 37, the second carousel picks up a further puck carrier 17 from the return branch 22. This does not create accumulations of puck carriers 17 along the second conveying path 23. In particular, no buffer accumulation zones of puck carriers are created at the last conveyor belt 24 of the return branch. The laws of motion of the puck carriers 17 along the return branch 22 are determined by the advancement speeds of the radially outer surfaces 26 of the conveyor belts 24 while running along their respective advance paths AP. The advancement speeds of the radially outer surfaces 26 of the conveyor belts 24 while running along their respective advance paths AP are set by the rotation speeds of the first motorized pulleys 27. In the preferred embodiment of the invention, the advancement speeds of the radially outer surfaces 26 of the conveyor belts 24 (while running along their respective advance paths AP) are different from each other. In the preferred embodiment of the invention, on each radially outer surface 26 of any conveyor belt 24 (while running along its own advance path AP) there is only one puck carrier 17.

When the article has been inserted on the first puck carrier 17, the loading station 20 brings the first puck carrier 17 again into the active branch 11.

When the first puck carrier 17 is conveyed between the insertion station 37 and the active branch 11, the second puck carrier 17 reaches the insertion station 37 and the second carousel 38 is stopped in its rotation to allow the article to be inserted on the second puck carrier 17.

## Claims

1. Conveying system (10) with a closed loop conveying path comprising:
an active branch (11) defining a first conveying path (15), a return branch (22) defining a second conveying path (23), and at least one puck carrier (17) wherein:
the active branch (11) comprises a plurality of stators (13) of a linear electric motor (12) configured to generate respective stator magnetic fields and arranged along the first conveying path (15);
the return branch (22) comprises at least one conveyor (24) comprising an advance path (AP) and a resume path (RP) cyclically run by a radially external surface (26) of the conveyor (24), said advance path (AP) extending longitudinally in a direction compliant with a conveying direction along the second conveying path (23) and said resume path (RP) extending longitudinally in a direction opposite to the conveying direction along the second conveying path (23); said conveyor (24) comprising a plurality of bodies made of ferromagnetic material (25) placed along the conveyor (24);
the puck carrier (17) being configured to run along said active branch (11) and said return branch (22) and comprising a housing seat (19) for an article and a magnet (18), said magnet (18) being configured to interact with magnetic fields produced by said plurality of stators (13) and being configured to magnetically attract the bodies of said plurality of bodies made of ferromagnetic material (25).

2. Conveying system (10) according to claim 1, wherein the return branch (22) comprises a plurality of conveyors (24) each of which comprising an advance path (AP) and a resume path (RP) cyclically run by a radially outer surface (26) of the conveyor (24), said advance path (AP) extending longitudinally in a direction compliant with the conveying direction along the second conveyor path (23) and said resume path (RP) extending longitudinally in a direction opposite to the conveying direction along the second conveyor path (23); each conveyor (24) comprising a plurality of bodies made of ferromagnetic material (25) placed along the circumferential development of the conveyor (24).

3. Conveying system (10) according to claim 2, wherein the radially outer surfaces (26) of all the conveyors (24) are parallel to each other when running along their respective advance paths (AP).

4. Conveying system (10) according to claim 3, wherein said conveyors (24) are arranged adjacent and successive to each other in a longitudinal direction to form a row of conveyors (24) along the second conveying path (23).

5. Conveying system (10) according to claim 3 or 4, wherein the longitudinal ends (26a) of the radially outer surfaces (26) of two longitudinally adjacent conveyors (24) are axially arranged side-by-side when running along their respective advance paths (AP).

6. Conveying system (10) according to any one of claims 2 to 5, wherein the radially outer surfaces (26) of two conveyors (24), separated in a longitudinal direction by an interposed conveyor (24), are circumferentially aligned with each other when running along their respective feed paths (AP).

7. Conveying system (10) according to any one of the preceding claims, comprising at least one guide rail (30) for said puck carrier (17) developing along the active branch (11) and along the return branch (22); said puck carrier (17) comprising at least one carriage (31) engaged on said guide rail (30) to run along said guide rail (30).

8. Conveying system (10) according to claim 7, wherein said puck carrier (17), when engaged on said guide rail (30) and when running along said return branch (22), is placed in contact with the radially outer surface (26) of the conveyor (24) when the radially outer surface (26) runs along the feed path (AP).

9. Conveying system (10) according to any one of claims 2 to 8, wherein each conveyor (24) is wound around a respective first pulley (27) and second pulley (28); said first pulley (27) of a conveyor (24) is mounted axially adjacent to and coaxial with the second pulley (28) of a longitudinally successive conveyor.

10. Conveying system (10) according to any one of claims 2 to 9, comprising a loading station (20) and an unloading station (21) interposed between the active branch (11) and the return branch (22); when said puck carrier (17) passes through said loading station (20) the puck carrier (17) is transferred from the return branch (22) to the active branch (11) and when said puck carrier (17) passes through said unloading station (21) the puck carrier (17) is transferred from the active branch (11) to the return branch (22).

11. Conveying system (10) according to claim 11, wherein said unloading station (21) comprises a first carousel (34) having at least one conveying seat (36) configured to engage with said puck carrier (17); said first carousel (34) being rotatable about an axis of rotation (R1) perpendicular to the radially outer surface (26) of any conveyor (24).

12. Conveying system (10) according to claim 10 or 11, wherein said loading station (20) comprises a second carousel (38) provided with at least one conveying seat (39) configured to engage with said puck carrier (17); said second carousel (38) being rotatable about an axis of rotation (R2) perpendicular to the radially outer surface (26) of any conveyor (24).

13. Conveying system (10) according to any one of the preceding claims, wherein said conveyor (24) is a belt conveyor.

14. Conveying system (10) according to claim 14, wherein said plurality of bodies made of ferromagnetic material (25) are joined together to form at least one reinforcing cord which extends throughout the circumferential development of the conveyor belt (24).

15. Conveying method along a closed loop conveying path comprising:
loading an article onto a puck carrier (17), wherein the puck carrier (17) comprises a magnet (18);
inserting the puck carrier (17) along a first conveying path (15) comprising a plurality of stators (13) of linear electric motor (12) configured to generate respective stator magnetic fields interacting with said magnet (18) of the puck carrier (17) to move the puck carrier (17) along the first conveying path (15);
unloading the article from the puck carrier (17);
inserting the puck carrier (17) along a second conveying path (23) comprising at least one conveyor (24) comprising a plurality of bodies made of ferromagnetic material interacting with said magnet (18) of the puck carrier (17) to retain the puck carrier (17) on a radially outer surface (26) of the conveyor (24).
